(19) Europäisches Patentamt / European Patent Office / Office européen des brevets

(11) **EP 1 932 431 A2**

(12) **EUROPEAN PATENT APPLICATION**

(43) Date of publication:
**18.06.2008 Bulletin 2008/25**

(51) Int Cl.:
*A23C 19/14* $^{(2006.01)}$    *A01J 27/00* $^{(2006.01)}$
*A01J 27/02* $^{(2006.01)}$    *A23C 19/16* $^{(2006.01)}$

(21) Application number: **07110869.0**

(22) Date of filing: **22.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **14.12.2006 EP 06126124**

(71) Applicant: **Campina Nederland Holding B.V.**
**5301 LB Zaltbommel (NL)**

(72) Inventor: **Faber, Timo Joost**
**4811 KB, Breda (NL)**

(74) Representative: **Swinkels, Bart Willem**
**Nederlandsch Octrooibureau**
**P.O. Box 29720**
**NL-2502 LS The Hague (NL)**

(54) **Process and device for removing the plastic coating from cheese**

(57) The invention relates to a process for removing the plastic coating from cheese by peeling, which process comprises the steps of a) providing a ripened cheese with a plastic coating suitable for ripening, where the "force before rupture" ($F_{rupture}$) of the plastic coating is greater than the force of adhesion ($F_{adhesion}$) between the said plastic coating and the cheese; and b) peeling said cheese with a peeling force ($F_{peeling}$) that is greater than $F_{adhesion}$ but smaller than $F_{rupture}$, wherein said plastic coating also has a "force for a 10% elongation" ($F_{elongation}$) that is greater than $F_{peeling}$, and wherein said plastic coating directly prior to peeling is subjected to an IR heat treatment, to obtain a plastic coating having a temperature higher than the glass temperature of said plastic coating but lower than 30°C in subsequent peeling step b), wherein said IR heat treatment comprises a first heating step and a response period of at least 0.5 seconds in which IR radiation, if at all, is applied in an amount of less than 10 kW/m$^2$. The invention also relates to a device for carrying out this process, and to peeled slices of cheese with a drying edge.

Fig 2b

EP 1 932 431 A2

Printed by Jouve, 75001 PARIS (FR)

**Description**

FIELD OF THE INVENTION

The invention relates to an improved process for removing the plastic coating from ripened cheese before cutting it into slices. It also relates to slices of ripened cheese obtained in this way, and to a device for carrying out the process in question. The invention further relates to cheese that is given a reinforced plastic coating to ensure that the plastic coating can be conveniently removed by this improved process.

BACKGROUND DESCRIPTION

Cheesemaking basically involves the standardization and thermal treatment of milk, followed by the coagulation or clotting of milk, the cutting of the junket or curd, the separation of the whey and the curd from each other, the pressing of the curd into cheese form, the salting of the cheese obtained, and finally ripening. The duration of ripening can vary from 4 weeks in the case of slightly ripened or immature cheese to over a year for well ripened or mature cheese, called respectively "young" and "old" in The Netherlands.

To ensure satisfactory ripening, the salted cheese is provided with a protective coating, called "cheese coating" or - as here - "plastic coating", prior to the ripening stage. US-A-2005/107,515 gives a list of suitable cheese coating materials, which are mostly based on vinyl ester homopolymers or copolymers, especially polyvinyl acetate (PVA). This plastic coating has several functions, such as for example a) to prevent the cracking of cheese when its shape or volume changes, b) to prevent the adhesion of the cheese to the shelves or boards in the ripening room, c) to reduce the moisture loss from the cheese to its surroundings, and d) to protect the cheese from moulds. To ensure that the ripening is not distorted, however, the plastic coating must be permeable to moisture and gases.

The application of this plastic coating is called "plasticizing", and is described in EP-A-1.121.862. What generally happens in practice is that the cheese is coated with a 45% aqueous emulsion of polyvinyl acetate-dibutyl maleate (PVA-DBM), typically in an amount of approximately 40 g/m$^2$ at a time. About 95% of the water evaporates from this emulsion after a day, leaving behind a solid, continuous adhering PVA-DBM layer on the cheese. This plasticizing process is repeated several times on both sides of the cheese during ripening, the number of applications depending on the duration of the latter.

When the ripening is finished, the cheese is mostly cut into flat slices, which can be directly used in a sandwich after opening the pack. However, these slices of cheese are sold without the inedible plastic coating that is needed during the ripening stage. For this purpose, the plastic coating is usually removed with the aid of a scraping or "shaving" tool, as described e.g. in DE-A-3305668. However, this operation removes not only the plastic coating, but also the edible dry rind formed on the body of the cheese. This operation is therefore also called "rind removal" and involves the loss of a relatively large amount of product as waste. This amount is 5.5-7% in a manual rind removal operation, but can be reduced to 3.5% when the operation is automated. The use of a grinding tool produces a particularly large amount of dust, which can be unhygienic and even represent a health risk.

This problem of losing edible rind and cheese is partly solved in NL-A-8.802.823, in which the cheese with its plastic coating is first warmed up preferably on its surface, by exposing it to warm air, and the cheese is then either sliced or trimmed by shaving. However, this patent does not specify the temperature used, and moreover the process still comprises the rind removal operation mentioned above, with all its disadvantages. The use of a solvent offers an alternative method for removing the plastic coating from cheese but is generally considered undesirable, especially in contact with food. More importantly, NL-A-8.802.823 is not at all concerned with the separate removal of the plastic coating, but with "ontkorsten" or rind removal. NL-A-8.802.823 does not distinguish between the cheese rind, which is formed during pressing of the cheese, and the plastic coating. Like DE-A-3305668, it results in undesired waste production and unnecessary cheese (rind) removal.

NL-A-8.802.823 discloses a process for removing rind from cheese, different from conventional scraping in order to reduce the amount of product wasted and to provide a simpler and more complete rind removal. The rind portion (optionally together with a plastic coating) is stripped off after the heating operation, starting with the outer layer. For this purpose, the cheese with its rind is heated to a "required temperature" in a hot-air tunnel or processing tunnel. However, the patent publication does not specify the required temperature. Moreover, since no attempts are made to separate coating from rind, the temperature aimed for does not correspond with the optimum temperature for separating the plastic coating from the rind. The heating operation according to NL-A-8.802.823 may cause large amounts of fat to separate out of the cheese body. Furthermore, the treatment with hot air softens the cheese too much to be able to slice it easily in the next stage.

It should be mentioned here that the removal of the plastic coating should not be confused with the opening of the protective cover that does not adhere to the cheese under it and is made e.g. of a waxy material, as described in EP-A-949.158. Such a waxy coating, known e.g. from the Babybel cheese line, provides the cheese with a layer that is impermeable to moisture and gases and is therefore completely unsuitable for ripening the cheese in the usual way. Furthermore, the waxy cover hardly adheres to the cheese at all. Similarly, FR-A-2.774.556 discloses a process for reinforcing soft cheese with an enclosing (and thus non-adhering) cover that can be simply pulled off. FR-A-1.337.562 also relates to the removal of an inedible cheese cover from soft cheese. However, this is not a top layer of the kind involved in the invention, as can be seen from the fact that it may be made e.g. of paper or metal, it is specially perforated and it does not adhere to the rind under it. Finally, DE-A-197 35 595 discloses a device for removing the rind from cheese or the casing from sausages. After making a preliminary cut, the rind or casing is removed by a rotating knurled blade. However, these are really casings, and the problem of adhesion between the coating and the lower layer does not exist here. Therefore, the solutions to remove the enclosing disclosed in the above patents (EP-A-949.158, FR-A-2.774.556, DE-A-197 35 595 and FR-A-1.337.562) are not suitable for use where the plastic coating adheres to the rind, which is the main problem under consideration.

The aim of the present invention is therefore to provide an improved process for the simple and rapid removal of the conventional plastic coating from cheese, which can be automated and carried out without the use of additional agents such as solvents and/or without any deleterious effect to the final characteristics of the cheese. It is also an aim of the present invention to save the valuable cheese rind in such an operation.

It is also an aim of the invention to provide a reinforced plastic coating, which is easier to remove and ensures the least possible interference with the ripening process, the logistic chain of operations, and the conditions for slicing the cheese.

## SUMMARY OF THE INVENTION

It has been found that, in order to solve the problem in question, the plastic coating protecting the cheese during the ripening stage can be removed not by scraping or "shaving", which increases the waste and produces comminuted material (dust), but by peeling it off, i.e. by applying a tensile force to it in the case of cheese covered with it.

Therefore, the coating must be sufficiently stiff if it is to be peeled off a coated cheese. The coating must not crumble during the peeling operation and preferably should not exhibit excessive stretching either. When the process is used for cheese on an industrial scale, the ambient temperature is generally 4-7°C, i.e. it is below the glass temperature of the coating plastic, which is about 10-13°C. However, the coating ruptures too soon if the processing temperature is below the glass temperature.

To exemplify, a plastic coating should meet the following requirement if its removal by peeling from the cheese is to be successful:

$$F_{adhesion} < F_{peeling} < F_{rupture}$$

where

$F_{adhesion}$     is the minimum force needed to remove the plastic coating from the cheese (including the edible rind)
$F_{peeling}$     is the force exerted on the plastic coating in order to peel it off the cheese, and
$F_{rupture}$     is the maximum force before rupture, i.e. the force the coating can withstand before it is torn.

The $F_{rupture}$ and $F_{adhesion}$ values are intrinsic properties of the cheese covered with the plastic coating. $F_{rupture}$ varies with the mechanical properties of the coating plastic, and $F_{adhesion}$ varies with the degree of adhesion between the plastic coating and the cheese. In particular, $F_{rupture}$ varies with the temperature and has too low a value below the glass temperature of the coating plastic.

Even when a skilled person would consider applying the heat-treatment according to NL-A-8.802.823, thus ignoring the fact that NL-A-8.802.823 is not attempting to separate coating and cheese rind from one another in the first place, the problem laid down above would still not be solved, since NL-A-8.802.823 is silent on temperature. It is the inventors'findings that temperature control is of vital importance to the process. Moreover, in addition to the problems listed in the Background Description, the process according to NL-A-8.802.823 cannot always be controlled in practice, and it can easily lead either to too low or to too high a temperature, in turn resulting in failure to successfully remove the coating from the cheese (rind). If temperature is too high, the plastic coating melts and stretches too much, thus making it impossible to peel it off. The force needed for a 10% elongation ($F_{elongation}$) is used as a measure in this context. Peeling is only feasible commercially if this $F_{elongation}$ is greater than the peeling force. $F_{elongation}$ is an intrinsic property of the cheese covered with a plastic coating. $F_{elongation}$ depends on the mechanical properties of the plastic coating and is equal to the force that has to be exerted on the coating in order to increase its length by 10% in comparison with its initial length. A plastic-coated cheese for which this balance of forces is ensured, can be peeled without the coating being torn, fractured and/or stretched too much, as will be illustrated in more detail in the examples.

These problems are greatly diminished when the temperature of the plastic coating during peeling operation is higher than the glass temperature of the plastic coating but lower than 30°C. Thereto, the plastic coating is subjected to IR heating before the peeling operation. By using an IR heating method for the coated cheese, the warming of the cheese in the bulk under the coating is avoided. Optionally, the plastic coating can be reinforced with a top layer either instead of or in addition to IR heating.

It is further found that the effects are even more pronounced using special IR heating conditions. This is based on the insight that the heating of the cheese rind actually encompasses separate aspects, each having its own response time. In order to guarantee a successful subsequent peeling operation, all those aspects have to be dealt with in a proper manner.

Firstly, bringing the plastic coating above its glass temperature brings about a change in the mechanical properties, as mentioned above.

Secondly, by heating, small amounts of fat and water diffuse from the cheese to the interface with the plastic coating. The fat and water then function as a detachment-promoting agent. This is a delicate process, as high fat/water migration would undesirably affect the underlying cheese body. In the opinion of the applicant, cheese can be described as a continuous matrix of swollen proteins, in which fat globules are dispersed. A rise of the temperature of the cheese would have a twofold effect, i.e. increase of the swelling of the cheese matrix and a higher level of melting of fat. For the latter, see e.g. Lopez et al. "Milk Fat Thermal Properties and Solid Fat Content in Emmental Cheese: A Differential Scanning Calorimetry Study" J. Dairy Sci. 89 p2894-2910, reporting 53.4 % of crystallized fat at 4 °C and 18.7 % at 21 °C for Emmentaler. Both factors mentioned are e.g. responsible for the phenomenon of "cheese sweating". The intense IR treatment results in a dramatic increase of the sweating process, which may result in expulsion of fat as well as water and promote detachment of the plastic coating from the cheese. However, fat/water migration takes time. If the cheese would be subjected to a continuous intense IR treatment during this whole time, too high temperatures may be realized at the cheese surface, causing the aforementioned problems. This is further demonstrated in the accompanying examples.

Thirdly, the coating composition can also play a role. Numerous coating compositions are in use, e.g. those with a low vapour permeability (see EP-A-1.537.785) and a high DBM content. DBM may interact at the interface when subjected to heat. It is not hard to imagine that this type of coating influences the attachment of the coating to the cheese by retaining water at the coating-rind interface. Also, so-called "combi-ripening", see e.g. NL1025011C; ripening in a plastic coating followed by foil ripening (no water transport) may also ease coating detachment.

The inventors have found that both the change in mechanical behaviour of the coating as well as the migration of fat/water from the cheese and softening of DBM from the coating layer to the interface can be realized if such an IR heat treatment encompasses a heating step and a subsequent response period in which no heat is applied. It is particularly preferred that the response period is followed by a second heating step. It is thus possible to avoid the plastic coating from being continuously submitted to IR, but still fulfil the above conditions.

The advantages of the process according to the invention are that it is quick and simple, can be carried out automatically or semi-automatically, so it is less labour-intensive, and the cheese rind losses are reduced without having to use an additional solvent, which is undesirable. The present improvements enable the peeling operation to be practiced on an industrial level with high throughput. This may further be optimized by handling a setup in which the cheese as well as the IR source can be moved in a continuous process, striving for a throughput of at least 5 cheeses per minute. The invention allows for a compact installation which reduces the investment in the decoating process considerably and restricts energy waste to a minimum.

DETAILED DESCRIPTION OF THE INVENTION

The invention therefore relates to a process for removing a plastic coating from a cheese by peeling, comprising the following steps:

　　a) providing a ripened cheese with a plastic coating suitable for ripening, where the "force before rupture" ($F_{rupture}$) of the plastic coating is greater than the force of adhesion ($F_{adhesion}$) between the said plastic coating and the cheese; and
　　b) peeling said cheese with a peeling force ($F_{peeling}$) that is greater than $F_{adhesion}$ but smaller than $F_{rupture}$,

wherein said plastic coating also has a "force for a 10% elongation" ($F_{elongation}$) that is greater than $F_{peeling}$, and wherein said plastic coating directly prior to peeling is subjected to an IR heat treatment, to obtain a plastic coating having a temperature higher than the glass temperature of said plastic coating but lower than 30°C in subsequent peeling step b), wherein the IR heat treatment comprises a first heating step and a response period of at least 0.5 seconds in which IR radiation, if at all, is applied in an amount less than 10 kW/m$^2$, preferably followed by a second heating step.

IR heat treatment

As mentioned above, the plastic coating on many ripened cheese types is not directly peelable, because either $F_{elongation}$ or $F_{rupture}$ or both fail to satisfy the set conditions for peelability. To facilitate peeling in every case, the temperature of the plastic coating during the peeling operation in Step b) should preferably be 15-25°C, most preferably above 20°C and especially about room temperature. Furthermore, the temperature at any point over the cross section of the plastic coating should be within the range stipulated according to the invention, i.e. both on the top of the plastic coating and where the plastic coating adheres to the cheese rind below it.

By using an IR heating method for the coated cheese, the warming of the cheese in the bulk under the coating is avoided. The response time between the first heating step and peeling is kept sufficiently long to allow for fat/moisture migration to the interface. If the response period is to be followed by a preferred second heat treatment, the opportunity is created to optimize time-consuming fat/water-migration towards the interface between cheese (rind) and plastic coating, thus weakening the adhesion forces between cheese and coating, while the temperature of the plastic coating is brought above its glass temperature just prior to peeling. Without the response period low in IR radiation, a single continuous IR heat treatment at significant IR radiation levels, all the way up to peeling, would result in too high local coating temperatures.

Since IR treatment may involve multiple heating intervals, the start of the IR heat treatment is addressed as the "first heating step". The first heating step is performed to initiate fat/water migration. Hence, power submitted to the plastic coating should be sufficient to liquefy part of the fat fraction or vaporize water near the interface. In principle, during the first heating step, it is not necessary to raise the temperature to the level deemed necessary during peeling. This may for instance be achieved in a subsequent second step, mainly intended to correct for any intermediate cooling

Where mention is made of "IR heating", it preferably involves less than 100 kW/m$^2$. Preferably at least a part of the treatment involves a power or output of 60-80 kW/m$^2$. A "heating step" according to the present invention preferably involves IR radiation in an amount of at least 10 kW/m$^2$. At lower energy levels, little effect is realized at the plastic coating. The above conditions apply to any possible heating step.

It is preferred to apply a first heating step of 0.5 - 10 seconds, more preferably 1 - 9 s, most preferably 1.5 - 8 s, in particular 2 - 5 seconds.

The first heating step preferably involves an overall IR radiation amount of 50 - 200 kJ/ m$^2$ cheese surface, more preferably 60 - 150 kJ/ m$^2$, most preferably 60 - 110 kJ/m$^2$. It is desired to keep the length and energy levels of the first heating step low, to avoid local overheating and energy waste. However, especially in case of a relatively short first heating step, it is considered necessary to give the cheese interface time to adjust, and to let the aforediscussed migration take place.

The first heating step is followed by a "IR heat-poor" response interval in which no heat is applied, or the heat intensity is at most 10 kW/m$^2$. Hence, during the response period IR radiation may still be submitted to the cheese surface, but only in significantly low levels, not being recognized as a heating step. It is conveniently addressed as the response or waiting time, period or interval, all having the same meaning.

The response period is preferably at least 1 seconds, more preferably at least 1.5 seconds, more preferably at least 2 seconds, most preferably at least 3 seconds, in particular at least 4 seconds. In order to avoid too much intermediate cooling, the response time is preferably up to 15 seconds, more preferably less than 12 seconds, most preferably less than 10 seconds, in particular at most 5 seconds. The advantage of such response period is that the temperature at the plastic coating is not raised beyond acceptable levels, while fat migration to a great extent also continues once heat is applied. It is preferred that the response interval does not involve IR heating at all.

The response period is followed by either peeling or a second heating step, where needed, to bring the cooled cheese to a temperature above the glass temperature of the coating material. A second heating step may typically involve 5 - 60 kJ/ m$^2$, more preferably 10 - 50 kJ/ m$^2$, most preferably 15 - 40 kJ/ m$^2$. These lower IR radiation amounts may typically be achieved by using lower radiation times or power, or combinations thereof.

Hence, in the context of the invention, if a first and a second heating step are applied, those heating steps are regarded distinct from one another through the response interval. The end of the first heating period and the start of the second interval may be characterized by a discontinuous or abrupt change in power or output. A "discontinuous change" is for instance achieved if IR radiation changes by more than 5 %, preferably more than 10 %, within 0.5 seconds. Such a change may involve either a power increase or a decrease, ultimately the result of switching the IR radiation source on or off. The power change thus distinguishes from normal short-term power fluctuations. The response period starts when the power level is below the required level. However, in the most preferred embodiment there is a clear response period in which no heat is applied, as will be discussed further below.

The above-defined requirement of some kind of discontinuity to characterize the start and end of a heating step does not encompasses a gradual increase or decrease in temperature. However, such a period involving a continuous change, e.g. a change of more than 1 % in power per second over a period of at least 3 seconds, is still considered equivalent to a heating step, since it makes it possible to apply heat to the cheese surface and change the interface composition locally over relatively extended time scales, without overheating the cheese interface.

In addition, it is preferred that the time between the start of the first heating step and subsequent peeling is at least 1 second, preferably at least 1.5 seconds, more preferably at least 2, 2.5, 3, 4, 5 seconds. In order to keep the throughput at industrially attractive levels, it is preferred that the time between the start of the first heating step and the start of subsequent peeling is less than 25 seconds, preferably less than 20 seconds, preferably less than 15 seconds, more preferably less than 10 seconds. At longer intervals, a second heat treatment may be necessary.

The heat levels may be determined at any point of the cheese coating subjected to the IR heat treatment. The time between heat application and peeling is to be analyzed at the exact same cheese coordinates. In principle, it is very well possible that heat is still applied at one part of the cheese, while another - already heated - part (at the same cheese surface) is subjected to peeling.

Where the IR heat treatment involves more than two heating steps, the second step corresponds to the last heating step immediately preceding the peeling operation, while the first heating step is considered the first step in the context of the invention, provided it fulfils the above criterion on minimum power level, and regardless whether or not it immediately precedes the second heating step. Such a second heating step can involve the same IR radiation power levels.

It is also preferred if the time between the second heating step and subsequent peeling is minimized, preferably less than 10 s, more preferably less than 5 s, most preferably less than 3 seconds. In practice, the minimum time is determined by the speed with which peeling may be performed. The time between a second or subsequent heating step and the peeling operation is not to be confused for the response period following the first heating step, since the effects of fat/water migration will never be as pronounced - if at all- as after the first heating step.

In one embodiment, the IR heating method involves a first step of rapid high-power IR treatment at a power or output of 60 - 80 kW/m$^2$ for 0.5-5 seconds, preferably 1-3 seconds, followed by a period at 5-10% of said power, preferably for a period of 5-30 seconds, in order to maintain the required temperature of the coating during further processing. Such a period, although it involves IR radiation, is to be regarded as a heat-poor response time applying the above definition.

In a preferred embodiment, the IR heat treatment involves two "real" heating steps. Preferably, each of these two heating steps independently lasts for 0.5 - 15 s, preferably 1 - 10 s, more preferably 1.5 - 8 s, in particular 2 - 5 s. It is often preferred that the first heating step is longer than the second heating step. In the first step, cheese fat is liquefied and migration of fat/water and/or softening of the coating layer is initiated. This requires a certain response time. The second step brings the cooled coating (again) above its glass temperature again, thus affecting the mechanical properties of the coating. This heating step may be kept short, given the direct response of the coating to heat. An example is given further below.

In one aspect of the invention, it may be preferred that the time length of the second heating step is less than 50 %, more preferably even less than 20 % of that of the first heating step.

In another aspect of the invention it may be preferred that the total power of the first heating step is at least 2 times, more preferably 3 - 6 times, most preferably 3.5 - 5 times the total power of the second heating step. The above general characteristics for the first and second heating step may be repeated here for this embodiment.

The response time between the first and second step is as described above. This way, fat and water migration is allowed for with minimum heat supply, thus avoiding overheating locally.

The surface heating achieved by the IR heat treatment is illustrated by the fact that the temperature of the cheese during this treatment is less than 15°C, preferably less than 12°C and especially less than 10°C at a depth of 3 mm from the meeting point between the plastic coating and the rind. This depth is generally inside the rind. The temperature in the actual body of the cheese is preferably not significantly different from the normal cheese processing temperature, since any detrimental effect of heating can then be avoided. Therefore, the temperature during the IR heating and the subsequent peeling is preferably less than 2 °C, more preferably less than 1 °C above the cheese processing temperature at a depth of 5 mm; less than 1 °C and preferably less than 0.5 °C above the cheese processing temperature at a depth of 7 mm; less than 0.5 °C above the cheese processing temperature at a depth of 8 mm.

At a depth of greater than 15 mm the temperature does not deviate from the cheese processing temperature. These values of course apply to those points in the cheese where the plastic coating has not been peeled off yet.

Cheese

The process of the invention can be used with any semi-hard or hard naturally ripened cheese of various fat contents that is provided with a plastic coating for the ripening period. The invention does not concern foil-ripened cheese, as described e.g. in EP-A-1.287.744, because such a foil is not an adhering layer, whereas the cheese in a plastic coating according to the invention has an adhering layer whose force of adhesion ($F_{adhesion}$) which by definition is greater than zero. The waxy or other cheese covers and casings described in the Introduction to the description are also excluded here.

A cheese of basically rectangular shape, such as the "Euro-block", is eminently suitable for the removal of the plastic coating from it by the peeling process. The "Euroblock" is a rectangular block of cheese, measuring about 50 x 30 x 10 cm, which is often used in cheesemaking. However, the peeling also works with other types of cheese, whether they have one or more surfaces.

The plastic coating can be any kind of conventional plastic coating that is suitable for protecting the cheese during ripening, such as for example those described in US-A-2005/107,515, prepared from an aqueous dispersion or emulsion of a polyvinyl ester, e.g. a vinyl acetate homopolymer or copolymer. This plastic coating must not be fully impermeable to moisture and gases, because the moisture and gases produced would interfere with the ripening process. Waxy substances, such as paraffin wax for example, are unsuitable, because they are completely impermeable to moisture, which is undesirable for ripening. The thickness and therefore the strength of the coating layer depend on the duration of the ripening period envisaged. The thickness of the plastic coating must therefore be considered to be a fixed magnitude when looking for plastic coating materials that can be peeled off. A slightly ripened ("young") cheese needs a relatively thin plastic coating, weighing typically about 200 grams per square metre of surface area in the dry state, while the corresponding figure is about 500 $g/m^2$ in the case of a well ripened ("old") cheese.

The everyday activities of the average person skilled in the art will allow him to choose the right plastic coating, apply it correctly and know the intensity and frequency with which the coating process has to be carried out. Good guidance is given in EP-A-1.537.785 and references cited therein. A particularly suitable coating material is CESKA® CoAt WL, commercially available with CSK Leeuwarden (The Netherlands).

Peeling test

Since the required mechanical properties $F_{rupture}$, $F_{elongation}$ and $F_{adhesion}$ depend both on the ripening time and on the type of plastic coating used, they cannot be defined here numerically without unnecessarily narrowing the scope of the invention. However, the person skilled in the art can directly and unambiguously determine the actual mechanical properties by carrying out a simple peeling and tensile test.

In a peeling test, a coated cheese sample is provided in such a way as to ensure a length/width ratio of 6:1, and the coating is partly removed from it by hand in such a way that the loose piece of coating, which is still connected to the rest of the coating still adhering to the cheese, can be fixed in the top clamp of a tensile testing apparatus. The rind that has been removed from the coating by hand is then fixed in the bottom clamp and the coating is subsequently pulled upwards by the tensile tester, so that it becomes detached from the rind. The force needed for this gives the value of $F_{adhesion}$. The value of $F_{adhesion}$ is the highest value found in five such peeling test measurements in newtons per millimetre, normalized over the cross section of the test piece.

The same method is used to determine $F_{rupture}$ and $F_{elongation}$ in a tensile test using a completely detached coating with a length/width ratio of 6.7:1. The value taken for either $F_{rupture}$ or $F_{elongation}$ is the minimum value found in five peeling tests, and normalized over the width of the test piece in the same way as in the case of $F_{adhesion}$.

To be able to compare the results of peeling and tensile tests with the values obtained here, the measurements should be carried out at a pulling speed of approximately 10 mm/sec and at a temperature of 21°C.

A suitable device for carrying out the peeling and tensile test is the Texture Analyser TA-XT2 (Stable Micro Systems, Great Britain), which is equipped with tensile grips. The examples given below show the results of these measurements processed for various types of cheese.

It should be noted here that the person skilled in the art need not repeat these tensile tests in exactly the same way or use the same tensile testing apparatus and/or the conditions specified here, provided that the various forces are determined in the same way, since these forces are connected with one another in the context of the present invention. Since $F_{adhesion}$, $F_{rupture}$ and $F_{elongation}$ vary with the temperature, it is particularly important to measure these values at the same temperature at which the peeling is also carried out.

Under these conditions and at ambient temperature (preferably 21°C), the adhesive force of a plastic coating is in the range of 0.2-0.9 N/mm, the actual value depending on the degree of ripening of the cheese. The fact is that the adhesion of a plastic coating to a well ripened ("old") cheese is in practice stronger than the adhesion of a plastic coating to a slightly ripened ("young") cheese. Thus, the force of strength of adhesion is generally

- about 0.2-0.3 N/mm in the case of a slightly ripened mellow ("jong belegen") Gouda cheese (48+)
- about 0.6-0.7 N/mm in the case of a medium-ripened mellow ("belegen") Gouda cheese, and
- about 0.6-0.8 N/mm in the case of an extra-ripened mellow ("extra belegen") Gouda cheese.

In the case of Milner cheese (30+), the value is in practice 0.3-0.4 N/mm for an extra mature type, 0.5-0.6 N/mm for a slightly mature one, and 0.8-0.9 N/mm for a fully mature one. The anomalous value for extra-mature Milner cheese is due to the fact that the last stage of the ripening process takes place in foil here.

In order to carry out the peeling easily and quickly, it is best to have a safety margin between the adhesive and peeling forces on the one hand, and the $F_{rupture}$ and $F_{elongation}$ values on the other hand, since this buffers for inhomogeneities that may occur in the plastic coating. The force before rupture ($F_{rupture}$) should preferably be at least 1.5 times and especially at least twice the $F_{adhesion}$ value. Furthermore, the $F_{elongation}$ should preferably be at least 1.5 times and especially at least twice the $F_{adhesion}$ value. More especially, $F_{rupture}$ and $F_{elongation}$ should also be at least 1.5 times and preferably twice the $F_{peeling}$ value. A high $F_{rupture}$ value is important, because it prevents the plastic coating from tearing or breaking during the peeling process. A low $F_{elongation}$ value also hampers the process, because it makes it more difficult to peel off the coating or even to roll it up automatically, and it additionally increases the risk of tearing as the coating becomes thinner and thinner.

Top layer

The plastic coating can be reinforced with the aid of a top layer either instead of or in addition to the warming of the plastic coating according to the invention, so that $F_{rupture}$ and $F_{elongation}$ are both increased. Since this reinforcement takes place on the outside of the coating, it hardly affects the value of $F_{adhesion}$. Theoretically, this can also be combined with a heating method other than IR heating, but it is obvious from what has been said above that its combination with the IR heating described here is preferred.

It is in principle possible to increase the amount of material used for the plastic coating and so apply a thicker PVA layer to the cheese. "PVA" is understood to comprise the conventional PVA-DBM coating materials addressed in the Background section, and such as those described in EP-A-1.537.785. The drying time of the extra PVA layer is at least a day, and this drying should preferably be carried out already during the ripening stage. Furthermore, this solution calls for extra plasticizing actions, because the amount of plastic applied on each occasion cannot exceed a certain value. The top layer can be formed in the usual way, i.e. by applying an aqueous PVA emulsion with the aid of a squirting device and then allowing it to dry. In one of the embodiments, the top layer is therefore made of the same material as the plastic coating under it, which is normally applied during the ripening period. In this embodiment, the cheese is preferably provided with a PVA layer whose thickness - especially in the case of slightly ripened and ripened mellow ("jong en belegen") Gouda cheese - is preferably at least 150% of the thickness of the PVA layer applied to this type of cheese normally, the usual thickness of the PVA layer being specified above. An advantage of this method is that this top layer is made of a food-grade material and makes it unnecessary to introduce a new material into the cheesemaking process.

A disadvantage of this method is that the materials involved are relatively expensive. It is not clear during the ripening stage which cheese is destined for slicing, so that the relatively expensive PVA emulsion is unnecessarily also applied to cheese that will not be sliced.

In an alternative embodiment, the plastic coating is therefore reinforced with a top layer that is made of a material other than that used for the plastic coating itself, while ensuring that the intrinsic characteristics, $F_{elongation}$ and $F_{rupture}$, of the plastic coating provided with a top layer still meet the requirements described before. This top layer can be applied quickly, so one can wait with its application until just before slicing, when the ripening of the cheese is complete and it finally becomes clear which cheese is destined for cutting into slices.

In this embodiment, the plastic-coated cheese is reinforced with a top layer before Step a) is carried out. The top layer adheres here to the plastic coating with a force of attachment $F_{sticking}$ that is greater than $F_{adhesion}$, being preferably at least 1.5 times and especially at least twice as great as the latter. The relationship between $F_{sticking}$ and $F_{peeling}$ is less important here. A plastic coating with a top layer is referred to below as "reinforced plastic coating" in contradistinction to untreated plastic coating. The above mentioned forces $F_{elongation}$ and $F_{rupture}$ then also apply to the reinforced plastic coating. This reinforcing top layer needs less than 15 minutes to prepare and dry, and the cheese is preferably peeled immediately after the top layer is applied to its plastic coating.

The force of attachment $F_{sticking}$ is defined as the force needed to remove the top layer from the plastic coating. This force can also be determined with a tensile tester in a simple way, using the same method as that described above for the other forces. $F_{sticking}$ is the minimum value found in five measurements. It is sufficient in practice to determine whether the $F_{sticking}$ value of a reinforced top layer is greater than the $F_{adhesion}$ value, i.e. whether the plastic coating will become detached from the cheese, or the top layer will become detached from the plastic coating during a tensile test. It is only in the first case that the reinforced plastic coating is suitable for peeling according to the invention.

The following are important criteria when choosing suitable materials for the top layer:

- high $F_{rupture}$/weight ratio
- high $F_{elongation}$/weight ratio
- food-grade quality, and
- sufficient adhesive and sticking force. Therefore attention is drawn to the ability to cross-link.

Furthermore, the material preferably should not be expensive or liable to creasing during application.

In one of the embodiments, this top layer can be applied directly to the plastic coating by sealing, i.e. by a process in which the top layer is pressed onto the plastic coating and is induced to undergo physical and/or chemical cross-linking, for which a high temperature may be needed. Such sealing techniques are well known to the person skilled in the art.

In another method, a layer of adhesive is first applied in order to ensure the required cross-linking to both the plastic coating and the reinforcing material. In another embodiment, the top layer therefore includes a layer of adhesive, with the reinforcing material - preferably a film - over it, so the adhesive layer is in contact with the plastic coating lying on the cheese. Examples of suitable top layers are polyolefin films made e.g. of polyethylene, polypropylene or combinations or derivatives thereof, which are glued to the plastic coating on the cheese with the aid of a hot-melt adhesive. The required thickness of the film is from 10 $g/m^2$ to 30 $g/m^2$, where the lower value depends of the operator's ability to handle the film during its application to the cheese, while the higher value depends on the cost of the film per cheese. To ensure that the film that is stuck to the plastic coating has favourable force/elongation characteristics and that the $F_{sticking} > F_{adhesion}$ condition is fulfilled, the film must be made to bind well with the aid of an intermediate layer of adhesive, e.g. of the hot-melt type. The same requirement of course also applies to the force of attachment between the adhesive and the film layer that is used for the required reinforcement.

The top layer preferably includes a hot-melt adhesive and has the above mentioned film over it. The hot-melt adhesive is applied before cutting the coating off the cheese. A self-adhesive food-grade hot-melt adhesive marketed by Dinxperlo in the Netherlands under the trade name of Saba is an example of suitable products that can be used for this purpose. It is first heated and then applied to the plastic coating, e.g. by spraying. If Saba is used, a thickness of 30-40 $g/m^2$ is suitable. Spraying cools the hot-melt adhesive. A film can be placed on the cheese shortly - typically a few seconds - after the application of the hot-melt adhesive. As an alternative, the hot-melt adhesive is first applied to the film with the aid of a roller, and then the tacky film is applied to the plastic coating.

To facilitate the peeling of the plastic coating from the cheese, any plastic-coated cheese destined for slicing can be fitted with a top layer, whether or not this carries a layer of adhesive, so that the cheese in question may be peeled out of its plastic coating without anything else being necessary. With a cheap material that can be applied quickly, this top layer is more attractive than the application of an extra-thick PVA layer to all cheeses.

In the preferred case, the top layer is so chosen that the $F_{rupture}$ value is guaranteed to be greater than 0.9 N/mm and preferably greater than 1.25 N/mm, so that any type of cheese can be peeled. The $F_{elongation}$ value is preferably greater than 0.9 N/mm, preferably greater than 1.25 N/mm, and especially greater than 2.5 N/mm. These values apply to the maximum adhesive strength as measured in the case of ripened Milner cheese.

<u>Peeling</u>

The peeling can be carried out either by hand or by machine. When it comes to peeling, the cheese carrying a plastic coating is preferably divided into a number of separate surfaces.

If the cheese is shaped like a block, it may be divided into 3 to 6 individual parts. Six sections are realized by removing all edges, while 3 sections are realized by shaving off the horizontal edges, so that the plastic coating is broken up, and three separate pieces are formed from it, namely a first part (consisting of the front, back and two sides of the cheese), a second part (consisting of the top), and a third part (consisting of the bottom). The first part or portion is then removed by using a first blade for making an incision parallel to, and over the whole length of, the edge in question, near one of the vertical edges, at a distance of preferably 1 cm.

Conveniently, the cheese is also subjected to IR heat treatment and subsequent peeling in this setup.

The plastic coating is then subjected to a tensile force at this incision in order to remove it from this first part, the tensile force applied being equal to $F_{peeling}$. The cutting and pulling described here are then repeated with the other parts or portions. It is of course possible to choose another sequence for peeling off the various parts. It is best to carry out at least the pulling process by a machine, preferably by rolling up the coating, and it is in fact best to carry out the cutting and the tensile action with the aid of a machine.

<u>Peeling device</u>

The invention therefore also relates to a device for removing the plastic coating from coated cheese, which device comprises a peeling tool for exerting a tensile force on the said plastic coating. The peeling tool can be mounted in such a way that it grips the plastic coating on both sides when it is in operation. However, contact with the heated surface is to be minimized, to prevent heat dissipation.

In one of the embodiments according to the invention the device comprises a cutting tool for cutting off a part or portion of the plastic coating when it is in operation. This way, the peeling tool can simply pick up the cut-off part of the plastic coating and then peel off the rest of the coating from the cheese surface. Preferably a narrow strip of the plastic coating is cut off here in such a way that it projects from the now partially exposed cheese. This helps the peeling tool to pick up the part or portion of plastic coating that has been cut off the cheese, this strip preferably having a width of 1 cm.

In one of the embodiments according to the invention, the device comprises a rupturing tool to cut the plastic coating in such a way during use as to form separate parts or portions of the coating. This rupturing tool can be e.g. a plane, a blade, a perforator, a laser or any other means known from the prior art for rupturing the coating. To split the plastic coating into parts or portions, the rupturing operation can be done continuously, e.g. when a plane is used, or discontinuously, e.g. when perforating the plastic coating along a number of lines lying at a certain distance from one another.

To regulate the peeling-off of the plastic coating, the peeling unit can comprise a tensile force regulator for controlling the tensile force exerted by means of the peeling unit. The peeling unit can also comprise two essentially parallel rollers. For the peeling operation itself, the coating is inserted between the two rollers, which are then pressed together, and at least one of them is then set in motion. In this case, the tensile force regulator sets the moment force that the drive unit of the roller imparts to the roller in question. In another embodiment of the peeling unit, any force regulating system that is known from the prior art and which cooperates with a drive unit can be used to control the tensile force applied.

In an embodiment according to the invention, the device comprises means of heating for warming the plastic coating when they are in operation. These means of heating can comprise infrared radiators.

It is preferred that after IR heating, any contact with the cheese surface is minimized, to prevent it from cooling, or worse, differences in temperature locally.

Peeled cheese product

The method of peeling used will leave its trace on the finished product, namely the packed, peeled cheese slices. The cheese slices according to the invention exhibit a "drying edge", i.e. a part with a marked colour gradient at the edge of each slice. The colour gradient is caused by drying and is a feature of naturally ripened cheese. This drying edge is due to the loss of moisture during ripening. The presence of a drying edge is considered attractive by cheese buyers, since naturally ripened cheese is generally preferred over foil-ripened cheese, which largely lacks this drying edge. Naturally ripened cheese that is trimmed or "shaved" with a plane also has such a drying edge originally, but it is removed by the trimming operation, so it is not obvious at a glance that the slice of cheese is a naturally ripened product. The peeling therefore helps the consumer to identify the origin of the product.

In the case of cheese ripened for about 12 months, this gradient covers a wider area of the cheese slice than in the case of cheese ripened e.g. for about 1 month. The width of the area with the colour gradient varies from 3 mm to 10 mm and is preferably at least 5 mm.

The thickness of the drying edge can be determined by taking a photocopy of a cheese slice with a thickness of 1-10 mm. The picture should be taken without contour reflection, i.e. the reflection plate normally present in the photocopier should be open when the copy is taken. The drying edge then shows up as a clearly visible strip that is darker than the central part of the image of the slice in the photocopy. The thickness of the drying edge can be easily measured on this picture.

In contrast to cheese trimmed with a plane, the peeled cheese slices according to the invention can also be identified as a repeating milled edge pattern. When the junket or curd is pressed, a wavy pattern is produced that persists even after further treatments, e.g. when the plastic coating is applied. Although foil-ripened cheese also exhibits this milled pattern, peeled cheese differs in that the peeling removes part of the cheese on one side at each milling line, so that the milling ceases to be symmetrical.

The cheese slices obtained according to the invention are also different from those treated with a solvent, where the symmetry of the milling pattern is also retained, just as in the case of foil-ripened cheese. Furthermore, residues of the solvent used are left behind in the cheese. Substances dissolved out of the plastic coating can also be deposited on the bare cheese, which can partly produce e.g. a red discolouration at the edge of the cheese.

The invention therefore also relates to peeled slices of cheese with a repeating asymmetric milled edge pattern and a drying edge extending over 3-10 mm and preferably over at least 5 mm.

The following figures represent some of the peeling embodiments of the invention. These correspond to the "3 sections"-embodiment in which all sides of the cheeses are peeled in a first step, using a rotating table, and the upper and lower surfaces are treated separately afterwards.

FIGURES

**Fig. 1a** is a schematic perspective drawing of a cheese in the form of a block.

**Fig. 1b** is a schematic cross-sectional view taken along line I-I in the cheese shown in Fig. 1a, with the plastic coating being divided into separate parts or portions of the coating.

**Fig. 2a** is a schematic side elevation of an embodiment of the device according to the invention, including a cheese shown in Fig. 1b that has been provided with a plastic coating.

**Fig. 2b** is a schematic side elevation of the device shown in Fig. 2a in the situation in which a part or portion of the plastic coating is seized by the peeling tool.

**Fig. 2c** is a schematic enlarged view of a part of the device shown in Fig. 2a, in the situation in which part of the plastic coating is cut off.

**Fig. 2d** is a schematic cross-sectional view taken along line II-II in Fig. 2b, in the situation in which a part of the plastic coating is peeled off the cheese.

Fig. 3a is a schematic side elevation of another embodiment of the device according to the invention.

**Fig. 3b** is a schematic cross-sectional view taken along line III-III in Fig. 3a.

**Fig. 3c** is a schematic side elevation of the device shown in Fig. 3a.

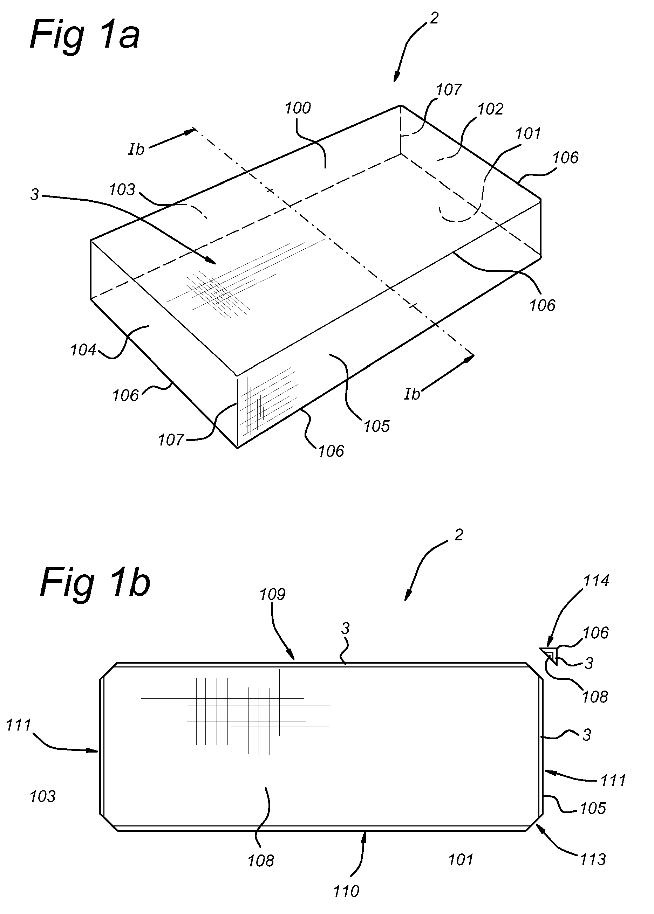

**Fig. 1a** shows a block of cheese 2 with a top surface 100, a bottom surface 101, and a first, second, third and fourth lateral surface 102, 103, 104 and 105, respectively. Both the top surface 100 and the bottom surface 101 are bounded by four horizontal edges 106. Each of the lateral surfaces 102, 103, 104 and 105 is bounded by two horizontal edges 106 and two vertical edges 107. The cheese 2 is fully covered by its plastic coating 3, extending over its top surface 100, bottom surface 101 and the lateral surfaces 102, 103, 104 and 105.

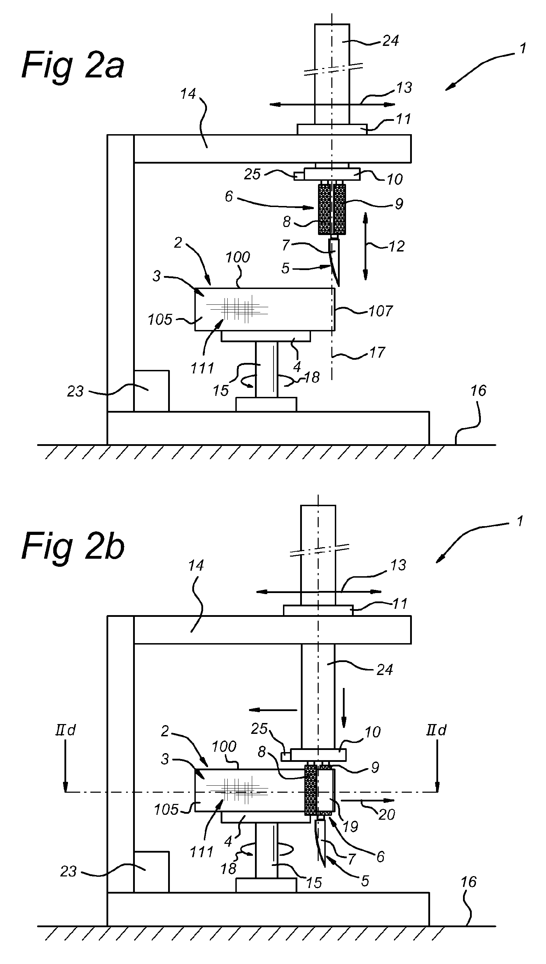

**Fig. 1b** shows a cross section taken along line I-I of the cheese shown in Fig. 2a. The drawing shows the bulk or body 108 of the cheese 2 and its plastic coating 3 divided into three separate coating portions 109, 110 and 111. The division of the plastic coating 3 is such that the latter is ruptured along all its horizontal edges 106. The severance at 103 is achieved by removing part 114 of the cheese 2 along all its horizontal edges 106, the said part having been trimmed off with a plane that is not shown. This gives rise to a first coating portion 109 (formed by the top surface 100), a second coating portion 110 (formed by the bottom surface 101), and a third coating portion 111 (formed by the lateral surfaces 102, 103, 104 and 105). Figure 1b may easily be modified to create six separate coating portions, if the vertical edges 107 are also ruptured.

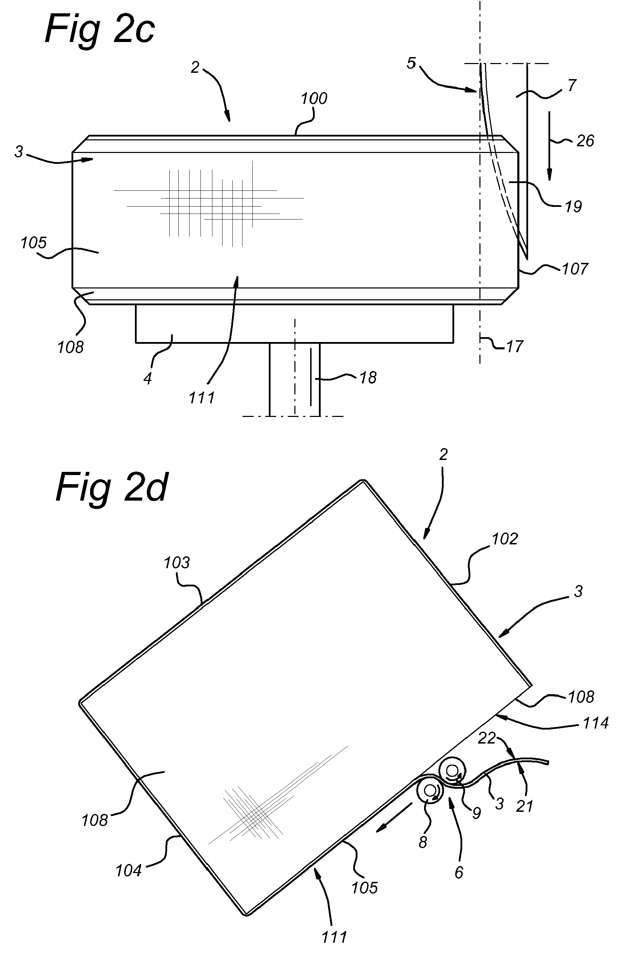

**Fig. 2a** shows a device 1 for peeling the plastic coating 3 off the cheese 2 shown in Fig. 1b, and specifically a device for peeling the coating off the lateral surfaces 102, 103, 104 and 105 (the third portion of the coating 111). This device comprises a first supporting plate 4 on which the cheese block 2 is placed. The supporting plate 4 rests on a first support 15, which rotates in the direction of the rotational arrow 18, and which in turn rests on a solid outside surface 16. The device 1 comprises a cutting unit 5 for removing part of the third portion of coating 111 from the plastic coating 3. This cutting unit 5 comprises a blade 7, positioned above the top surface 100, near one of the vertical edges 107 of the fourth lateral surface 105. The device also comprises a peeling unit 6 which is connected to the cutting unit 5 and lies in a line which is the continuation of the cutting unit 5. The peeling unit 6 comprises a first roller 8 and a second roller 9, which are parallel to each other and are coupled with a roller drive 10 that actuates both rollers 8 and 9. This roller drive 10 can also move the rollers 8 and 9 between a first position and a second position, where in the first position the rollers are at a certain distance from each other, as shown in Fig. 1a, while in the second position the rollers 8 and 9 are pressed together, as shown in Fig. 2b and Fig. 2d. The roller drive 10 is fixed to a guide 24, which is in turn coupled with a guide support 14 via a guide drive 11, and the guide support 14 in turn rests on a solid outside surface 16. The guide drive 11 is for moving the guide 24 to and from the support plate 4, so the cutting unit 5 and the peeling unit 6 move in the direction of the arrow 12. Another function of the guide drive 11 is to change the position of the guide 24 along the guide support 14, together with the cutting unit 5 and the peeling unit 6. The direction of this displacement is indicated by the arrow 13. The device 1 comprises a control system 23 that regulates the roller drive 10 and the guide drive 11. The roller drive 10 and the guide drive 11 are connected to the control system 23 by a communication channel (not shown). To use the cutting unit 5, the blade 7 is moved in the direction of the cheese 2 resting on the first supporting plate 4. The blade 7 is now in its fixed initial position with respect to the supporting plate 4. The latter comprises a cheese-positioning tool (not shown), which moves the cheese 2 positioned on the supporting plate 4 in such a way that the blade 7 can cut off a narrow strip (19 in Fig. 2b and Fig. 2c) from the plastic coating 3 along one of the vertical edges 107 of the fourth lateral surface 105 when the cutting unit 5 is displaced towards the cheese 2 in the direction of the arrow 12. When this strip of the plastic coating 3 has been cut loose, it still remains connected to one side of the cheese 2. The blade 7 is therefore moved along the first line of displacement 17 until it reaches its final position, shown in Fig. 2b. Since the peeling unit 6 is displaced in the same direction when the cutting unit 5 is moved, the part 19 cut off from the plastic coating 3 by the blade 7 is taken up between the two rollers 8 and 9, which are at a certain distance from each other.

**Fig. 2b** shows the blade 7 in its final position, in which the part 19 cut off is taken up in its entirety between the rollers 8 and 9, which are then moved by the roller drive 10 in such a way that these rollers 8 and 9 are pressed together. Since the part 19 cut off is now between the rollers 8 and 9, the plastic coating 3 of the cut-off part 19 is clamped between the rollers 8 and 9. The roller drive then turns the rollers 8 and 9, so that the plastic coating 3 is passed through between the rollers 8 and 9, and the cut-off part 19 of the plastic coating 3 is moved in the direction shown by the arrow 20. A tensile force ($F_{peeling}$) is exerted here on the plastic coating 3 in order to peel it off. This removes the third portion 111 of the coating, so that the cheese 2, placed on the supporting plate 4, which is in turn supported rotatably, is turned in the direction shown by the rotational arrow 18. In order to hold the peeling unit 6 at a constant distance from the lateral surfaces 102, 103, 104 and 105 of the cheese 2 during the rotation of the latter, the device is fitted with a visual sensor 25, which is connected to the control system 23 via a communication channel (not shown). Using the information generated by this sensor 25, the control system 23 makes the guide drive 11 move the guide 24 with the peeling unit 6 in the direction of the arrow 13. As an alternative that can be used with cheese of standard measurements, with the cheese 2 resting on the first supporting plate 4 in the initial position, a sensor is used to record the angle of rotation as the first supporting plate 4 is turned with the cheese 2 on it. Using this information and the already known measurements of the cheese 2, the control system 23 can command the guide drive 11 to act in such a way that the peeling unit 6 stays at a constant distance from the cheese 2 during the peeling operation.

**Fig. 2c** is a schematic enlargement of the drawing of part of the device 1 in the situation where the part 19 of the plastic coating 3 is cut off. The blade 7 is moved along one of the vertical edges 107 of the fourth lateral surface 105 in order to cut off the part 19. The blade 7 cuts the cheese 2 on the first lateral surface 102 (see Fig. 1a) at a distance of one or two millimetres from the fourth lateral surface 105. The blade 7 is moved here along the line of displacement 17 in the direction of the arrow 26. The result of this action is that a strip is cut off from the plastic coating 3 to form the cut-off part 19 of the plastic coating 3. On one side, at the line of displacement 17, the plastic coating 3 of the cut-off part 19 is connected with the part of the plastic coating 3 covering the body 108 of the cheese 2. The width of the cut-off part 19, which corresponds to the distance between the line of displacement 17 and the edge 107 that is the closest to it, is preferably 1 cm.

**Fig. 2d** shows a schematic cross-sectional view taken along the line II-II in Fig. 2b in the situation where a part of the plastic coating 3 is peeled off the cheese 2. The arrows illustrated in the rollers 8 and 9 show the direction in which these rollers 8 and 9 rotate. This rotation introduces the plastic coating 3 into the peeling unit 6, comprising rollers 8 and 9. As the plastic coating 3 is clamped in between the rollers 8 and 9 and as these rollers are rotated, a tensile force ($F_{peeling}$) is exerted on the plastic coating. The peeling unit 6 grips the plastic coating 3 on both sides, since the first roller 8 grips the first side 21 of the plastic coating, and the second roller 9 grips the second side 22 of the plastic coating. In order to peel off the plastic coating 3, the tensile force ($F_{peeling}$) exerted by the peeling unit 6 should be greater than the force of adhesion ($F_{adhesion}$) between the plastic coating 3 and the body 108 of the cheese. Furthermore, the tensile force ($F_{peeling}$) exerted by the peeling unit 6 should be weaker than the force to rupture ($F_{rupture}$) of the plastic coating 3 in order to prevent the rupture of the plastic coating 3 during the peeling operation. Part 114 of the fourth lateral surface 105 has been peeled off from the third coating portion 111 of the cheese 2. The remaining lateral surfaces 102, 103 and 104 are still covered with the plastic coating 3 of the third portion 111 of the coating. The body 108 of the cheese is exposed over the peeled part 114 of the fourth lateral surface 105.

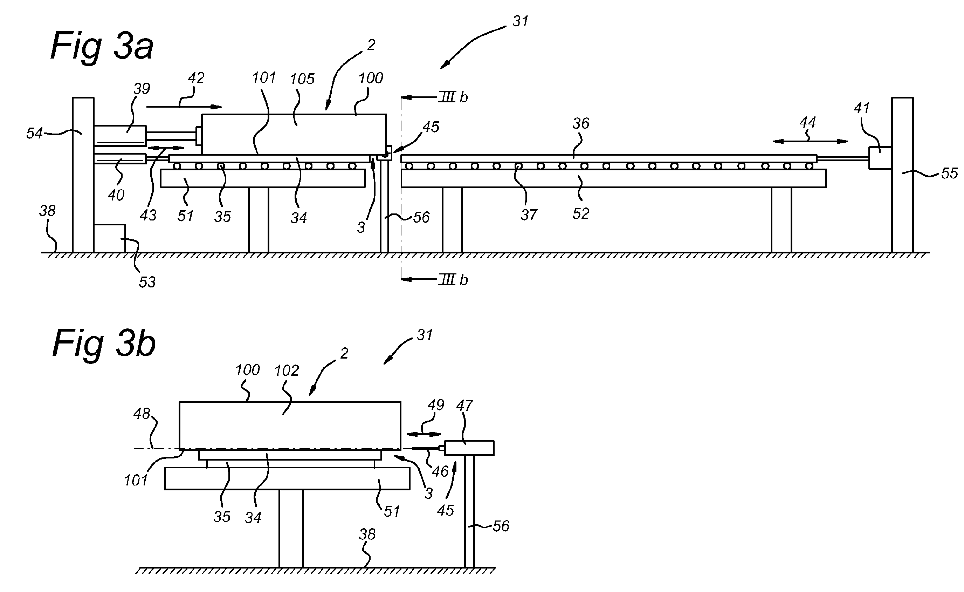

**Fig. 3a** shows a device 31 for peeling the plastic coating 3 off a cheese 2 as shown in Fig. 1b, and specifically from its top surface 100 and bottom surface 101, i.e. a device for peeling off the first portion 109 and the second portion 110 of the coating, respectively. The device comprises a second supporting plate 34 on which the cheese block 2 is positioned. The second supporting plate 34 is movably supported on the first rolls 35, which are in turn rotatably supported about their longitudinal axis by a first roll support 51, and this rests on a solid outside surface 38. To move the second supporting plate 34, the latter is connected to a first plate-moving tool 40, which is mounted for moving the second supporting plate 34 in the direction of the arrow 43. The device also comprises a cheese-moving tool 39 for the displacement of the cheese 2 in the direction of the arrow 42. Both the first plate-moving tool 40 and the cheese-moving tool 39 are connected to a first support 54 for the displacing unit, which support rests on a solid outside surface 38. In a line extending from the second supporting plate 34, the device 31 comprises a third supporting plate 36, which is movably supported by the second rolls 37, and the latter are rotatably supported by a second roll support 52 along their longitudinal axis. To move the third supporting plate 36, the latter is coupled to a second plate-moving tool 41, which is incorporated for displacing the second supporting plate 34 in the direction of the arrow 44. The second plate-moving tool 41 is connected to a second support 55 for the displacing tool, and this support in turn rests on a solid outside surface 38. The device 31 also comprises two cutting units 45, positioned near the cheese 2.

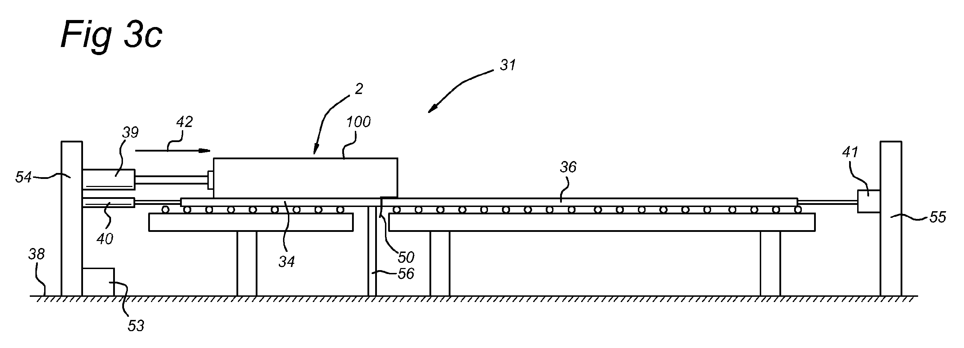

**Fig. 3b** is a schematic cross-sectional view taken along line III-III in Fig. 3a. The two cutting units 45 comprise a second blade 46, which is coupled to the blade-moving tool 47. This tool, the purpose of which is to move the blade 46 in the direction of the arrow 49, is coupled to a third support 56 for the displacing tool, where the support 56 rests on a solid outside surface 38. To use the second cutting unit 45, the cheese 2 is moved by the second positioning tool (not shown) to the right position on the second supporting plate 34. The second blade 46 is then moved from its fixed initial position with the aid of the blade-moving tool 47 along the second line of displacement 48 in such a way that - as in the case of the device shown in Fig. 2 - a narrow strip of the plastic coating 3 is cut off from the bottom surface 101. The second blade 46 in this case cuts the cheese 2 on its first lateral surface 102 at a distance of one or two millimetres from the bottom surface 101. After cutting it loose, this strip, shown by 50 in Fig. 3c, is only connected to the cheese 2 on one side. The shape of the second blade 46 is such that, after this operation of the second cutting unit 45, the second part 50 cut off from the plastic coating 3 projects from the cheese 2. In this case, a part of the second portion 110 of the coating is cut off, so that the cut-off part 50 projects from the bottom surface 101.

Fig. 3c is a schematic side view of the device 31 in the situation where the second cutting unit 45 has cut off a part 50 of the plastic coating from the bottom surface 101, and where the first and second plate-moving tools 40 and 41 have moved the second and third supporting plates 34 and 36 into a position opposite each other. In this position, the two supporting plates 34 and 36 are pressed together by the two plate-moving tools 40 and 41. Since the cut-off part 50 projects from the cheese 2, it gets clamped between the second and third supporting plates 34 and 36 when these two plates are moved as mentioned above. The cheese 2 is then displaced in the direction of the arrow 42 by the cheese-moving tool 39. In this case, the cheese 2 is moved from the second supporting plate 34 to its final position on the third supporting plate 36. During this displacement, the cut-off part 50 of the plastic coating gets clamped in between the supporting plates 34 and 36. As a result, a tensile force ($F_{peeling}$) is exerted on the plastic coating 3 during this displacement, so that the plastic coating 3 is peeled off from the cheese 2. Each of the two supporting plates 34 and 36 grips the plastic coating 3 on a different side, so that the peeling tools 34, 36 and 39 seize the plastic coating 3 on two sides from the device 31. The final position into which the cheese 2 is moved is on the third supporting plate 36, and the whole plastic coating 3 is peeled off from the bottom surface 101, which corresponds to the second portion 110 of the coating in Fig. 1b. To remove the plastic coating 3 from the top surface 100, which corresponds to the first portion 109 of the coating, the cheese 2 is raised from the third supporting plate 36 and is positioned on the second supporting plate 34, with the top surface 100 of the cheese 2 in the abovementioned initial position, so that the whole cycle described here can be repeated in the same way.

EXAMPLES

## Example 1 - $F_{adhesion}$, $F_{rupture}$ and $F_{elongation}$ for various types of cheese $F_{elongation}$ for various types of cheese

These three F values were determined for Gouda cheese and Milner cheese at various stages of ripening, as sold by Campina in the Netherlands. These cheeses had been ripened in a protective PVA coating obtained from CSK Food (CESKA®-CoAt WL 150.0230; the Netherlands), and were stored at 4°C.

Five samples measuring 150 x 25 mm were cut off the top of each cheese, and an approximately 35-mm strip was removed from the plastic coating by hand.

This strip was fixed in the top clamp of a Texture Analyser TA-XT2 from Stable MicroSystems in Great Britain, using tensile grips. The part of cheese, laid bare over 35 mm, was fixed in the other clamp.

The top clamp was then moved upwards at a speed of 10 mm/sec at room temperature to remove the coating from the cheese. The other settings of the apparatus are shown in Table 1.

**Table 1 - Settings of the Texture Analyser and software**

|  | **Peeling test** | **Tensile test** |
|---|---|---|
| Test mode | To measure the force in tension | To measure the force in tension |
| Test option | Return to start | Return to start |
| Pre-test speed, mm/sec | 2 | 2 |
| Test speed, mm/sec | 10 | 10 |
| Post-test speed, mm/sec | 10 | 10 |
| Trigger type | Auto | Auto |
| Trigger force, N | 0.3 | 0.3 |
| Break detect | - | Return/rate |
| Break sensitivity, N | - | 1 |
| Distance, mm | 100 | - |
| Initial distance between the clamps | 15 | 50 |

The adhesive force was measured over a length of 10 mm. The highest value was recorded and the force was firstly corrected for the width of the cheese sample by dividing the measured value (in N) by this width (in mm). This operation was then repeated with the four other samples of cheese. The highest value obtained for these five samples of each type of cheese is shown as $F_{adhesion}$ in Table 2.

**Table 2 - Mechanical properties of Gouda and Milner cheese at different stages of ripening in a PVA coating, as measured in peeling and tensile tests**

| | $F_{adhesion}$, N/mm | $F_{rupture}$, N/mm | $F_{elongation}$ N/mm |
|---|---|---|---|
| | (peeling test) | (tensile test) | |
| Gouda cheese | | | |
| Slightly ripened ("jong") | 0.26 | 0.41 | 0.17 |
| Slightly ripened mellow ("jong belegen") | 0.24 | 0.50 | 0.18 |
| Medium-ripened mellow ("belegen") | 0.67 | 0.28 | 0.10 |
| Extra-mellow ("extra belegen") | 0.79 | 1.07 | 0.29 |
| Well ripened ("oud") | 0.63 | 0.99 | 0.29 |
| Milner cheese | | | |
| Slightly mature | 0.57 | 0.25 | 0.13 |
| Mature | 0.83 | 1.12 | 0.26 |
| Extra-mature | 0.34 | 0.70 | 0.17 |

The coating was completely removed from the cheese and then cut into five samples measuring 100 x 15 mm. These samples were used for the tensile strength measurements in the same apparatus as in the previous case at a temperature of 21°C, using the settings shown in Table 1.

The samples were fixed in the clamps, and the latter were pulled apart. The values of $F_{rupture}$ and $F_{elongation}$ were determined with the aid of the Texture Analyser.

The minimum values of these forces, normalized for the width of the sample, as determined in five measurements, are shown in Table 2.

The value of the adhesive force in the case of extra-ripe Milner cheese in Table 2 deviates from the normal picture, according to which the adhesive force increases with the duration of ripening. This is because the last part of the ripening of a Milner cheese is carried out in a film.

The data in Table 2 also show that $F_{adhesion}$ was greater than $F_{rupture}$ for medium-ripened mellow ("belegen") Gouda cheese and for slightly ripe Milner cheese, which indicates that it was impossible to remove the coating. In all other cases, $F_{rupture}$ was greater than $F_{adhesion}$, but it was still insufficient to ensure a satisfactory peeling. Furthermore, an elongation of more than 10% was noted in all these cheese samples before the plastic coating became detached, which made peeling difficult or impossible.

**Example 2 - Reinforcing the plastic coating with a top layer**

A hot-melt adhesive was applied to a slightly ripened ("young") Gouda cheese that had been ripened in a PVA coating for 4 weeks. The hot-melt adhesive used here was a self-adhesive food-grade product made by Dinxperlo in The Netherlands and sold under the trade name of Saba. This adhesive was heated to about 150°C in a melting tank and applied to the PVA coating with the aid of a Robatech sprayer (from Westervoort, The Netherlands) in a thickness of 30-40 g/m$^2$. Spraying and contact with the cheese cooled the hot-melt adhesive down.

Thirty seconds after the application of the hot-melt adhesive, the cheese was wrapped in a standard polypropylene (PP) packaging film with a thickness of 30 g/m$^2$, making sure that no creases were formed.

Again five samples were taken from this cheese for testing as described in Example 1.

The values found for $F_{rupture}$ and $F_{elongation}$ are listed in Table 3 in the form of their ratios with respect to $F_{adhesion}$, which was the $F_{adhesion}$ value given in Table 2 for slightly ripened ("young") Gouda cheese.

These ratios were compared with the corresponding ratios for a slightly ripened ("young") Gouda cheese ripened in a PVA coating but without the top layer used above, and with a slightly ripened ("young") Gouda cheese to which an extra PVA layer was applied with a squirting device immediately before slicing, the thickness of this extra PVA layer being 120 g/m$^2$ in the wet state and about 60 g/m$^2$ later.

**Table 3 - Comparison of a plastic coating with and without a top layer**

|  | $F_{rupture}/F_{adhesion}$ | $F_{elongation}/F_{adhesion}$ |
|---|---|---|
| Without the top layer | 1.6 | 0.7 |
| With a PP top layer | 13.7 | 6.3 |
| With a PVA top layer | 4.9 | 1 |

**Example 3 - Temperature profile of the cheese in the case of IR heating**

A Gouda cheese ripened in a PVA coating and having a temperature of 5°C was heated by infrared radiation at a power of 70 kW/m$^2$ (100% output) for 1.5 seconds, after which it was heated through for another 15 seconds at a power of 5%, and then the IR heaters were switched off. The temperature of the surroundings was set at 5°C. The cheese had a coating with a thickness of about 0.2 mm, and an approximately 5 mm thick rind. There was no top layer present.

The temperature during the IR heating was measured at various depths of the coating, the rind and the body of the cheese, and the results are shown in Table 4.

**Table 4 - Temperature profile of cheese during IR heating, °C**

|  | Depth, mm | After IR heating at 100% output | | After IR heating at 5% output | | | |
|---|---|---|---|---|---|---|---|
|  |  | Temperature (°C) at t=0 | t=1.5s, °C | t=5s, °C | t=10s, °C | t=15s, °C | t=16.5s, °C |
| Coating | 0.02 | 5 | 23.9 | 20.6 | 21.3 | 22.2 | 22.5 |
|  | 0.06 | 5 | 23.6 | 20.6 | 21.3 | 22.2 | 22.5 |
|  | 0.1 | 5 | 23 | 20.6 | 21.3 | 22.2 | 22.5 |
|  | 0.14 | 5 | 22.2 | 20.5 | 21.3 | 22.1 | 22.4 |
|  | 0.18 | 5 | 21.1 | 20.5 | 21.2 | 22.1 | 22.4 |
|  |  |  |  |  |  |  |  |
| Rind | 0.7 | 5 | 19.7 | 20.4 | 21.1 | 22 | 22.3 |
|  | 1.7 | 5 | 10.4 | 11.9 | 13.6 | 15 | 15.3 |
|  | 2.7 | 5 | 7.13 | 7.75 | 8.73 | 97 | 9.99 |
|  | 3.7 | 5 | 5.85 | 6.1 | 6.51 | 6.99 | 7.14 |
|  | 4.7 | 5 | 5.34 | 5.43 | 5.58 | 5.77 | 5.83 |
|  |  |  |  |  |  |  |  |
| Cheese | 7.2 | 5 | 5.07 | 5.09 | 5.13 | 5.17 | 5.19 |
|  | 11.2 | 5 | 5 | 5 | 5.01 | 5.01 | 5.01 |
|  | 15.2 | 5 | 5 | 5 | 5 | 5 | 5 |
|  | 19.2 | 5 | 5 | 5 | 5 | 5 | 5 |
|  | 23.2 | 5 | 5 | 5 | 5 | 5 | 5 |

**Comparative example - Temperature profile of cheese after heating with hot air**

Example 3 was repeated, but the cheese was heated with hot air at a temperature of 30°C instead.

These results showed a completely different picture. A time of 7000 sec was needed here to obtain a coating temperature comparable to that achieved after the above IR heating (23.9°C). During this hot-air treatment, the temperature of the rind and the body of the cheese rose from 5 to 21°C at a depth of 0.5 mm and to 11°C at a depth of 23 mm. The whole cheese was considerably warmer than after the IR treatment.

### Example 4 - Temperature profile of the cheese in the case of IR heating part II

A Gouda cheese ripened in a PVA coating (without toplayer) and having a temperature of 5 °C was heated by infrared radiation of 70 kW/m$^2$ (100% output) for 1.5 seconds, after which a response period of 5.5 seconds at 5 % IR radiation (3.5 kW/m$^2$) was applied, before cutting and decoating.

The temperature during the IR heating was measured at various depths of the coating, the rind and the body of the cheese, and the results are shown in Table 5.

**Table 5 - Cheese temperature profile during IR heating, °C (no 2nd heating step)**

| | Depth, mm | Temperature (°C) at t=0 | t=1s, °C | t=2s, °C | t=6s, °C | t=7s, °C | t=9s, °C |
|---|---|---|---|---|---|---|---|
| Coating | 0.02 | 5 | 18.9 | 20.7 | 20.7 | 20.9 | 20.0 |
| | 0.06 | 5 | 18.7 | 20.6 | 20.7 | 20.9 | 20.0 |
| | 0.1 | 5 | 18.1 | 20.5 | 20.7 | 20.8 | 20.0 |
| | 0.14 | 5 | 17.2 | 20.4 | 20.7 | 20.8 | 20.0 |
| | 0.18 | 5 | 16.1 | 20.2 | 20.6 | 20.7 | 20.0 |
| | | | | | | | |
| Rind | 0.7 | 5 | 14.8 | 20.0 | 20.5 | 20.6 | 20.0 |
| | 1.7 | 5 | 8.5 | 10.6 | 12.2 | 12.6 | 12.9 |
| | 2.7 | 5 | 6.4 | 7.2 | 7.9 | 8.1 | 8.4 |
| | 3.7 | 5 | 5.6 | 5.9 | 6.2 | 6.3 | 6.4 |
| | 4.7 | 5 | 5.2 | 5.3 | 5.5 | 5.5 | 5.5 |
| | | | | | | | |
| Cheese | 7.2 | 5 | 5 | 5.1 | 5.1 | 5.1 | 5.1 |
| | 11.2 | 5 | 5 | 5 | 5 | 5 | 5 |
| | 15.2 | 5 | 5 | 5 | 5 | 5 | 5 |
| | 19.2 | 5 | 5 | 5 | 5 | 5 | 5 |
| | 23.2 | 5 | 5 | 5 | 5 | 5 | 5 |

### Example 5 - Temperature profile of the cheese in the case of IR heating part III

Example 4 was repeated, but now a response period of 5.0 seconds and no IR heat was applied, to be followed by a second heating step of 0.5 seconds, at 100 % output. The results are shown in table 6.

The cheese showed a higher temperature - about 1 °C - at the moment of decoating. The higher temperature appeared to favour the peeling process.

**Table 6 - Cheese temperature profile during IR heating, °C (2nd heating step)**

| | Depth, mm | Temperature (°C) at t=0 | t=1s, °C | t=2s, °C | t=6s, °C | t=7s, °C | t=9s, °C |
|---|---|---|---|---|---|---|---|
| Coating | 0.02 | 5 | 18.9 | 19.7 | 17.5 | 25.4 | 21.0 |
| | 0.06 | 5 | 18.7 | 19.8 | 17.6 | 25.3 | 21.1 |
| | 0.1 | 5 | 18.1 | 19.8 | 17.7 | 24.9 | 21.2 |
| | 0.14 | 5 | 17.2 | 19.8 | 17.7 | 24.3 | 21.3 |
| | 0.18 | 5 | 16.1 | 19.8 | 17.8 | 23.4 | 21.4 |

(continued)

|  | Depth, mm | Temperature (°C) at t=0 | t=1s, °C | t=2s, °C | t=6s, °C | t=7s, °C | t=9s, °C |
|---|---|---|---|---|---|---|---|
|  |  |  |  |  |  |  |  |
| Rind | 0.7 | 5 | 14.8 | 19.7 | 17.9 | 22.2 | 21.5 |
|  | 1.7 | 5 | 8.5 | 10.5 | 11.3 | 13.2 | 13.6 |
|  | 2.7 | 5 | 6.4 | 7.2 | 7.6 | 8.4 | 8.7 |
|  | 3.7 | 5 | 5.6 | 5.9 | 6.0 | 6.4 | 6.5 |
|  | 4.7 | 5 | 5.2 | 5.3 | 5.4 | 5.5 | 5.6 |
|  |  |  |  |  |  |  |  |
| Cheese | 7.2 | 5 | 5 | 5.1 | 5.1 | 5.1 | 5.1 |
|  | 11.2 | 5 | 5 | 5 | 5 | 5 | 5 |
|  | 15.2 | 5 | 5 | 5 | 5 | 5 | 5 |
|  | 19.2 | 5 | 5 | 5 | 5 | 5 | 5 |
|  | 23.2 | 5 | 5 | 5 | 5 | 5 | 5 |

## Example 5a - Cheese sweating

Different pieces of Gouda 48+ cheese were foil-ripened during 28 days, the surface dried, and then subjected to IR heating. The IR heating (100% output; 70 kW/m$^2$) was carried out for 3 and 10 seconds, while the response time was varied at 1 and 10 seconds. Since the foil-ripened cheeses did not contain a coating, effects of IR radiation on the cheese surface may thus be studied directly.

Thereto, TORK kitchen paper towels [12 x 12 cm] were weighed, pressed onto the cheese surface after each IR and response time, to let any freed components absorb thereinto, and weighed again. The numbers are standardized to the initial weight and moisture content of the paper towel. The contributions of water and fat were determined by oven-drying the kitchen paper towels at 160 °C during 30 minutes, and by microscopy, respectively. For the latter, Sudan IV was used as a fat indicator.

The results are listed in table 7. It shows that if cheese is subjected to a first IR treatment for a longer time, more migration takes place. A response time shows beneficial effects in cases of a relatively short first heating step.

**Table 7 - cheese sweating due to IR treatment (Gouda 48+)**

| ref | heating time (s) | response time (s) | relative weight uptake (%) | Fat Uptake (%) | Water uptake (%) |
|---|---|---|---|---|---|
| 1 | 3 | 1 | 8.5 | 8.5 | 0 |
| 2 | 3 | 10 | 16 | 14.6 | 1.4 |
| 3 | 10 | 1 | 80.3 | 77.6 | 2.7 |
| 4 | 10 | 10 | 79.5 | 74.7 | 4.8 |

It is noted that the numbers found in these " peel-less" cheese experiments are by no means representative for a peeling operation according to the invention, but merely serve to evidence the phenomenon of fat/water migration at the cheese surface, and explain the need for a response time. Hence, it cannot be concluded from table 7 that the larger fraction of especially migrated fat results in improved peeling properties.

## Example 5b - Cheese sweating

Example 5a was repeated for Milner 30+ and a different batch of Gouda 48+. The results are presented in tables 8 and 9 for Gouda and Milner, respectively.

**Table 8 - cheese sweating due to IR treatment (Gouda 48+)**

| ref | heating time (s) | response time (s) | relative weight uptake (%) | Fat Uptake (%) | Water uptake (%) |
|---|---|---|---|---|---|
| 5 | 3 | 1 | 13.6 | 13.6 | |
| 6 | 3 | 10 | 14 | 14 | |
| 7 | 6 | 1 | 8.2 | 7.6 | 0.6 |
| 8 | 6 | 10 | 30.4 | 24.8 | 5.6 |
| 9 | 10 | 1 | 50.3 | 34.4 | 15.9 |
| 10 | 10 | 10 | 75.3 | 60.8 | 14.5 |

**Table 9 - cheese sweating due to IR treatment (Milner 30+)**

| ref | heating time (s) | response time (s) | relative weight uptake (%) | Fat Uptake (%) | Water uptake (%) |
|---|---|---|---|---|---|
| 11 | 3 | 1 | 6.9 | 0.2 | 6.7 |
| 12 | 3 | 10 | 6.6 | 5.9 | 0.7 |
| 13 | 6 | 1 | 12.2 | 8.9 | 3.3 |
| 14 | 6 | 10 | 9.5 | 9.5 | n.m.* |
| 15 | 10 | 1 | 10.9 | 10.9 | n.m.* |
| 16 | 10 | 10 | 5.9 | 5.9 | n.m.* |
| *n.m. = not measurable due to water evaporation | | | | | |

Tables 7, 8 and 9 altogether show that fat is mostly contributing, especially when handling short IR heating steps. For Milner water evaporation is strongly contributing, and at extended heating times moisture migration even results in water evaporation.

### Example 5c - Temperature during and after IR treatment

The temperature at a depth of 1.7 mm under the coating of a PVA-coated Gouda cheese was measured for the combinations of IR heating steps and response time laid down in example 5b. The results are shown in table 10.
In particular 10 seconds IR heating appears to result in an unacceptable increase in temperature in the cheese rind.

**Table 10 - temperature at 1.7 mm under cheese coating**

| heating time (s) | response time (s) | temperature (°C) |
|---|---|---|
| 3 | 1 | 15.3 |
| 3 | 10 | 16 |
| 6 | 1 | 23 |
| 6 | 10 | 24 |
| 10 | 1 | 40 |
| 10 | 10 | 41 |

### Claims

1.  Process for removing the plastic coating from cheese by peeling, which process comprises the following steps:

a) providing a ripened cheese with a plastic coating suitable for ripening, where the "force before rupture" ($F_{rupture}$) of the plastic coating is greater than the force of adhesion ($F_{adhesion}$) between the said plastic coating and the cheese; and

b) peeling said cheese with a peeling force ($F_{peeling}$) that is greater than $F_{adhesion}$ but smaller than $F_{rupture}$,

wherein said plastic coating also has a "force for a 10% elongation" ($F_{elongation}$) that is greater than $F_{peeling}$, and wherein said plastic coating directly prior to peeling is subjected to an IR heat treatment, to obtain a plastic coating having a temperature higher than the glass temperature of said plastic coating but lower than 30°C in subsequent peeling step b), **characterized in that** said IR heat treatment comprises a first heating step and a response period of at least 0.5 seconds in which IR radiation, if at all, is applied in an amount less than 10 kW/m$^2$.

2.  Process according to claim 1, wherein said response period is followed by a second heating step.

3.  Process according to any one of the preceding claims, wherein said first heating step lasts 0.5-15 s.

4.  Process according to any one of the preceding claims, wherein said first heating step involves IR radiation in an amount of 50 - 200 kJ/m$^2$ cheese surface.

5.  Process according to any one of the preceding claims, wherein the time between the start of said first heating step and said peeling is in the range of 1 - 25 seconds.

6.  Process according to any one of claims 2-5, wherein the time length of said second heating step is less than 50 % of that of said first heating step.

7.  Process according to claim 1, wherein said IR heating treatment comprises a first step of rapid high-power IR treatment at a power or output of 60 - 80 kW/m2 for 0.5-5 seconds, followed by a response period at 5-10% of said power.

8.  Process according to any one of the preceding claims, wherein the plastic coating in peeling step b) has a temperature in the range of 20-25°C.

9.  Process according to any one of the preceding claims, wherein the cheese with plastic coating is reinforced with a top layer before Step a) is carried out.

10. A device for removing a plastic coating from cheese covered with it, said device comprising peeling tools, which are equipped for exerting a tensile force on the plastic coating when it is in operation.

11. A peeled slice of cheese with a repeating, asymmetrically milled edge, wherein the slice of cheese displays a drying edge of 3-10 mm.

# Fig 1a

# Fig 1b

Fig 2a

Fig 2b

# Fig 2c

# Fig 2d

# Fig 3a

# Fig 3b

EP 1 932 431 A2

Fig 3c

EP 1 932 431 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005107515 A
- EP 1121862 A
- DE 3305668 A
- NL 8802823 A
- EP 949158 A

- FR 2774556 A
- FR 1337562 A
- DE 19735595 A
- EP 1537785 A
- NL 1025011 C
- EP 1287744 A

**Non-patent literature cited in the description**

- **LOPEZ et al.** Milk Fat Thermal Properties and Solid Fat Content in Emmental Cheese: A Differential Scanning Calorimetry Study. *J. Dairy Sci.,* vol. 89, 2894-2910